# EUROPEAN PATENT SPECIFICATION

(11) **EP 0 800 454 B1**
(45) Date of publication and mention of the grant of the patent: **06.12.2000**
(21) Application number: 95907889.0
(22) Date of filing: 06.01.1995
(51) Int. Cl.: B32B 17/04, E04B 1/94

(54) **USE OF A SANDWICH PANEL AS FIRE INSULATION OR FIRE BARRIER AND A METHOD FOR CONTINUOUS FABRICATION OF SANDWICH ELEMENTS**
VERWENDUNG VON EINEM SANDWICHBAUELEMENT ALS BRANDISOLIERUNG ODER BRANDABSCHOTTUNG UND VERFAHREN ZUM KONTINUIERLICHEN HERSTELLEN VON DIESEN SANDWICHBAUELEMENTEN
UTILISATION D'UN PANNEAU SANDWICH COMME ISOLATION OU BARRIERE ANTI-FEU ET PROCEDE DE FABRICATION EN CONTINU D'ELEMENTS SANDWICH

(43) Date of publication of application: 15.10.1997
(73) Proprietor: COLIBRI PANEL A/S, 6060 Hareid (NO)
(72) Inventor: HANSEN, Pal, Francis, N-1619 Fredrikstad (NO)
(74) Representative: Newby, Martin John
(86) International application number: NO9500006
(87) International publication number: WO9620829

(56) References cited:
- EP-A- 0 041 054
- WO-A-91/11323
- US-A- 5 126 192

## Description

The present invention relates to the use of material of a particular composition as the core material of a sandwich panel for use as a fire insulation or as a fire barrier.

U.S. Patent 4,286,013 describes a silicon based laminate containing a fibrous filler and microspheres of glass. It is stated that the material has good properties with respect to burn-through and flame spreading. What distinguishes the subject matter of this patent from the present invention is:
1. The laminate has a relatively high density, about 0.6 g/cm³. The insulating portion of the material used in the present invention has a density of 0.140-0.3 g/cm³.
2. The laminate per se does not have satisfactory insulating properties. Accordingly, it is not suitable as fire insulation or thermal insulation by itself.

U.S. Patent 4,433,069 describes a silicon based foam and the production thereof. It is disclosed that the foam has good properties for the sealing of fire walls/floors where pipes/cables penetrate the fire barrier, the foam being very resistant to burn-through. The material according to this patent differs from the material used in the present invention, inter alia, by the following points:
1. The foam is soft and cannot function, for example, in a self-supporting fire wall, or as insulation in a self-supporting sandwich element.
2. Furthermore, it is assumed that the material is comparatively heavy (based on the types of similar materials with which the applicant is acquainted).

U.S. Patent 4,820,576 describes a "flame retardant" resorcinol based polymer which has certain features in common with parts of the material used in the present invention (the sandwich elements), but lacks the microspheres present in the material used according to the invention.

U.S. Patent 5,126,192 describes a "flame retardant" prepreg material containing glass spheres, where the essential features are the electrical properties (printed circuit boards), may easily be drilled and shows further that holes in a laminate prepared from the prepreg material. Again it must be concluded that the material per se has points of resemblance to the prepreg material included in the materials used according to the present invention. However, the resin types described are not suitable in connection with the types of fire exposure to which the present invention is directed.

EP 0,492,154 A1 describes a thermoplastic film filled with hollow glass microspheres, specially designed for electrical application. Here the above comments on U.S. Patent 5,126,192 apply once more.

JP 4,178,440 A describes a light weight foam based on epoxy and glass spheres in combination with a foaming agent. It is not disclosed which of the material's fire resistance properties that are favourable, but the applicant's experience is that epoxy based foams emit excessive smoke and thermal energy in relation to what is permitted within the sector where the present invention is to be used. The density is also high: 0.46 g/cm³ in the example given. That which distinguishes this publication from the present invention is, inter alia:
1. The publication describes only a foam having "fire resistant" properties.
2. The material according to this patent consists of a basic material which, because of its chemical nature, emits an appreciable amount of energy and smoke during combustion, and which therefore is unsuitable under present-day requirements as a fire barrier in vessels or buildings.

NO 157,854 C2 describes a product which is basically close to the core material used in connection with the present invention, a prepreg of glass fiber and phenol containing thermoplastic, hollow microspheres. The patent describes both the product and the production process for the prepreg material. It also describes the preparation of what is termed "homogenous laminates" is produced, this being a material very close to the core material used in the present invention. The production of "heterogenous laminates" is also described, according to which the prepreg material is pressed together with plywood or other wood panels. What distinguishes the present invention from this patent is, inter alia, the following:
1. NO 157,854 C2 does not describe the use of the material as insulation in the build-up of a fire barrier. That is, although the surface layer is of importance, it is first and foremost the mechanical properties and thermal insulation that are important during the strain imposed by a fire.
2. NO 157,854 C2 provides no description of materials suitable as laminates in connection with this prepreg foam core, nor does it describe a structure which is suitable as a fire barrier.

An object of the present invention is the use of a sandwich panel, the core of which consists of a material prepared from a varying number of layers of prepregs of a thermosetting resin containing thermoplastic microspheres and where the outer laminates are of a conventional type, as fire insulation or fire barrier, the core constituting the whole insulation or a part thereof.

In what follows we shall attempt to elucidate certain concepts within fire technology, so that the invention can more easily be distinguished from prior art. In fire technology there are defined two main groups of properties for which separate requirements are set. The test method/standards are likewise completely different:
Fire resistance is characterized by fire insulation and fire integrity (being sealed against smoke and having structural durability in a fire). This comprises, for example, fire doors and fire walls. The requirements to fire resistant structures are that they shall "keep the fire inside" for a certain period of time. This is generally implied in the requirement that the temperature on the unexposed side shall not exceed a given level during a given period of time. The structure must be able to support the loads for which it is dimensioned and no smoke or flames must penetrate the structure. Such a structure can be prepared from a number of materials, such as wood, steel, concrete, glass wool, rock wool, gypsum boards, each by itself or, preferably, different materials in combination.
Fire reaction characterizes the reaction of materials to the impact of a fire (generally small, for example a cigarette glow, small burners simulating various fire sources, etc.), and what is tested is generally the properties of the surface. Radiation of heat, smoke/gas production, flame spread, and ignition point are central magnitudes. These magnitudes do not indicate how the structure behaves as a fire barrier; cf. the point above on fire resistance.

More simply expressed, fire resistance is a description of how a fully developed fire influences the surroundings outside the fire cell, whereas fire reaction relates to parameters which are important as to whether a fire will develop or how it does develop within the fire cell.

According to the present invention there is provided use of material consisting of layers of preimpregnated fiber reinforcement, so-called prepegs, of a thermosetting resin containing thermoplastic microspheres as the core material of a sandwich panel for use as a fire insulation or as a fire barriers. The thermosetting resin and microspheres having low weight, so that the density of the prepreg material is low. This prepreg can be used to produce the core in various thicknesses and densities, depending upon requirements set to fire insulation/fire protection. This production takes place in press tools, where heat is supplied to complete the curing of the prepreg material.

The type of core material used in the above mentioned panel has, to our knowledge, never been used before in structures serving as fire barriers/fire insulation. Other types of cores between laminates, which in principle are similar to the laminates used in the present case, have been used, however. Thus, polyimide foam and other suitable insulation material may be mentioned.

In the core material used according to the invention, the fire retardant resin can advantageously consist of phenolic resin, which prior to curing is liquid at room temperature and thus can easily be applied to the selected reinforcement material. Most types of phenolic resin can be used since all have good properties in a fire. The reinforcement of the core can advantageously consist of glass fiber or other reinforcement material having good properties at high temperature. The microspheres used to impart low density to the core, can advantageously consist of thermoplastic. The main thing is that they are light and on application are well distributed in the prepreg material. The laminates used in conjunction with the core can advantageously consist of glass fiber reinforced phenolic resin, or another high-temperature resistant combination of resin and reinforcement. Metallic surfaces can also be used. Optionally, the sandwich panel may also be provided with a light weight backing insulation of polyimide foam or other material having low weight and good insulating properties at high temperature.

The fire protection panel that is obtained by the present invention has low weight compared to previously used panels allegedly fullfilling the same requirements. The panel has furthermore low heat conducting power, has good sound absorbing properties, is rigid and can support relatively heavy loads, is very easy to form/adapt in installation, does not corrode and has good resistance to moisture, rot and most chemicals.

An advantageous area of application for the sandwich panels obtained according to the invention is that of fire barrier and fire insulation in connection with aluminum structures.

### Embodiment example

The panels can be used as a protection for aluminum structures, the requirements for such protection being described in IMO Resolution A.373. For a fire barrier affording protection for 60 minutes, the so-called "A-60" class, the requirement is that the rise in temperature on the side opposite to that of the fire exposure does not exceed an average of 139°C during the test period of minimum 60 minutes. At the same time it is not permitted that the temperature anywhere in the aluminum structure increase by more than 200°C. The test is described in IMO Res. A. 517.

A panel produced with the core material according to the invention was tested pursuant to the above provisions.

The panel that was tested was a self-supporting sandwich panel having a thickness of 26 mm, consisting of laminates of glass fiber reinforced phenol and a core of glass fiber reinforced, expanded phenol resin having a light weight backing insulation of polyimide foam.

This panel fulfilled all requirements set in the above mentioned standards and is therefore well suited to the above indicated use.

The panels can also be used as self-supporting fire barriers, and in door constructions, where the same requirements to back-side temperature and surface are set.

## Claims

1. Use of material consisting of layers of prepregs of a thermosetting resin containing thermoplastic microspheres as the core material of a sandwich panel for use as a fire insulation or as a fire barrier.

2. Use according to claim 1, where the thermosetting resin consists of phenolic resin.

## Patentansprüche

1. Verwendung eines aus Schichten von thermoplastische Mikrokugeln enthaltende Prepregs aus einem duroplastischen Harz bestehenden Materials als Kernmaterial einer Sandwichplatte zum Einsatz als Brandschutzisolierung oder Brandsperre.

2. Verwendung nach Anspruch 1, bei der es sich bei dem duroplastischen Harz um Phenolharz handelt.

## Revendications

1. Utilisation d'un matériau constitué de couches de pré-imprégnés d'une résine thermodurcissable contenant des microsphères thermoplastiques comme matériau central d'un panneau sandwich pour une utilisation comme isolation contre le feu ou comme coupe-feu.

2. Utilisation selon la revendication 1, où la résine thermodurcissable est constituée de résine phénolique.
